# EUROPEAN PATENT SPECIFICATION

(11) **EP 2 890 513 B1**
(45) Date of publication and mention of the grant of the patent: **29.07.2020**
(21) Application number: 13762984.6
(22) Date of filing: 26.08.2013
(51) Int. Cl.: B23C 5/06, B23C 5/20

(54) **MILLING TOOL HOLDER AND OVAL-SHAPED DOUBLE-SIDED INDEXABLE CUTTING INSERT**
FRÄSWERKZEUGHALTER UND OVALER DOPPELSEITIGER INDEXIERBARER SCHNEIDEINSATZ
SUPPORT D'OUTIL DE FRAISAGE ET PLAQUETTE RAPPORTÉE OVALE RÉVERSIBLE ET INDEXABLE

(30) Priority: 28.08.2012 AT 3452012 U
(43) Date of publication of application: 08.07.2015
(73) Proprietor: Ceratizit Luxembourg Sàrl, 8232 Mamer (LU)
(72) Inventor: KISTER, Fabien, F-51000 Metz (FR)
(74) Representative: Ciesla, Dirk
(86) International application number: PCT/EP2013/002559
(87) International publication number: WO 2014/032789

(56) References cited:
- EP-A1- 0 300 247
- EP-A2- 2 364 803
- WO-A1-93/00192
- DE-A1- 10 308 037
- DE-U1- 9 112 169

## Description

The present invention relates to an oval-shaped double-sided indexable cutting insert and a milling tool comprising such a cutting insert.

In the field of milling applications, it is well-known to use milling tools comprising a milling tool holder with cutting insert receiving pockets in which a plurality of cutting inserts can be mounted. In general, the cutting inserts are formed of a material which is harder and more wear resistant as compared to the material of the milling tool holder. For example, the cutting inserts are typical made from cemented carbide, cermet or ultra-hard cutting materials, such as PCD (polycrystalline diamond) or CBN (cubic boron nitride). In many cases, the cutting inserts are realized as thus-called indexable cutting inserts comprising a plurality of cutting edges which can independently be used one after another after the previously used cutting edge is deteriorated due to wear. The subsequently useable cutting edges can for example all be arranged along the same side of the cutting insert in the case of single-sided cutting inserts or can be arranged along both main sides of the cutting insert in the case of double-sided cutting inserts. Depending on the milling application and, in particular, on the shape of the work-piece to be generated and the material of the work-piece to be machined, different kinds of milling tools are employed.

For example, for several milling applications - mainly rough-machining in which the evenness of the machined surface is not the most important factor - cutting inserts having a round cutting edge in top view are preferred due to the particular robustness of the curved shape of the cutting edge. Further, in high-feed surface finishing milling applications in which the work-piece is machined with a high feed rate but relatively low cutting depth, convexly shaped cutting edges are also preferred due to their robustness.

WO 93/00192 A1 describes a milling cutter comprising a cutter body with a plurality of insert seats circumferentially spaced about an outer periphery of the cutter body. A cutting insert is received in each of the insert seats. The milling cutter provides lateral and rotational support for the cutting insert by providing a slot in the bottom of the insert seat for receiving a corresponding rail integrally formed on the cutting insert.

EP 2 364 803 A2 describes a cutting insert for an end mill the shape of which cutting insert is derived from the base shape of a parallelogram. The cutting insert has two straight cutting edges extending along the longitudinal sides of the parallelogram base shape. Convexly shaped cutting edges are formed along the shorter sides of the parallelogram base shape.

DE 91 12 169 U1 describes a milling head having a plurality of cutting inserts at a face side thereof. At least two cutting inserts are arranged such that their cutting edges overlap.

EP 0 300 247 A1 describes an indexable cutting plate having parallel top faces, especially for use as a smoothing cutting plate in holders of multi-toothed milling cutters which are equipped with several round indexable cutting plates for roughing and at least one smoothing cutting plate.

It is an object of the present invention to provide cutting inserts and a milling tool comprising such an insert which provide improved performance and which are suited for both, applications in which commonly round-shaped cutting inserts are used and high-feed surface finishing applications.

The object is solved by an oval-shaped double-sided indexable cutting insert for milling applications according to claim 1. Further developments are specified in the dependent claims.

Since the cutting insert is oval in shape, use of the cutting insert similar to a round cutting insert but with reduced approach angle as well as use of the cutting insert for high-feed surface milling are enabled. Thus, a high degree of versatility is provided for. Since the cutting insert is realized as a double-sided cutting insert having the first to fourth cutting edges which can subsequently be used by indexation, a particularly economic solution for such milling applications is provided. Further, due to each of the cutting edges comprising the first cutting edge part and the second cutting edge part, for high-feed surface milling applications involving a small cutting depth, the number of independently usable cutting edge parts is further increased by a factor of two.

According to a preferred development, each cutting edge is adapted such that, in one mode of operation, both the first cutting edge part and the second cutting edge part are simultaneously useable for machining and, in another mode of operation, are individually usable for machining. In this case, particularly versatile use of the oval-shaped cutting insert is enabled.

According to a further development, at least the portion of each cutting edge which is usable for cutting of material is convexly shaped over its entire length. In this case, the whole region of the cutting edge which is suited for cutting of the work-piece can be used both in applications for which conventionally round cutting inserts are employed and high-feed surface milling applications. However, other portions of the cutting edge which are not intended to actively participate in the cutting operation may have a different shape.

According to a further development, at least the portion of each cutting edge which is usable for cutting of material has, in top view onto the top surface, a shape of a section of a circle or a shape of a section of an ellipse. In this case, the cutting insert is provided with cutting edges which enable particularly convenient cutting conditions both in high-feed surface milling applications and in milling applications which are conventionally performed with round cutting inserts.

According to a further development, the first and second convex side surfaces extend in parallel to the first symmetry axis. Thus, in this case the cutting insert is formed as a thus-called negative type insert which can be manufactured in a particularly reliable and cost-efficient manner.

The object is also solved by a milling tool according to claim 6 which comprises a milling tool holder and a plurality of oval-shaped double-sided indexable cutting inserts mounted in the cutting insert receiving pockets.

Since the cutting insert receiving pockets are adapted for mounting oval-shaped indexable cutting inserts, machining with very robust cutting edges is enabled. In this context, oval shape means that in top view the outer contour of the cutting insert is mainly determined by two large convex side surfaces, namely a first convex side surface and a second convex side surface, such that a major axis and a minor axis can be defined, in particular in a manner somehow similar to an ellipse. The cutting inserts have an elongated shape in top view. Due to the oval shape of the indexable cutting inserts for which the milling tool holder is adapted, the approach angle during milling can be reduced as compared to round-shaped cutting inserts which results in reduced loads on the active cutting edge. As a result, milling can be performed at higher feed rates or with a longer lifetime of the cutting inserts. Further, the oval shape permits independently using a first cutting edge part and a second cutting edge part of each cutting edge in high-feed surface finishing applications which results in enhancing the number of independently useable cutting edge parts by a factor of two. Thus, versatility of the milling tool holder is high since the milling tool holder can be used for different applications. Due to the arrangement of the cutting insert receiving pockets such that the cutting inserts are mountable spaced apart from the rotational axis, the milling tool holder enables milling in a manner which is similar to conventional milling applications using round-shaped cutting inserts and in a manner which is similar to conventional high-feed surface finishing applications. Thus, milling applications which substantially differ from ball end mill applications can be realized. Preferably, all cutting inserts are mountable spaced apart from the rotational axis in corresponding positions and with corresponding orientations.

The cutting insert receiving pockets are arranged such that the oval-shaped cutting inserts are mountable with a major axis of the oval-shaped cutting inserts arranged at an angle between 85° and 130° with respect to the rotational axis. In this context, although the cutting inserts may (but need not) have the shape of an ellipse, the terms "major axis" and "minor axis" are used similar to an ellipse in order to define the long symmetry axis and the short symmetry axis, respectively, of the oval shape of the cutting insert. Further, the mentioned angle is determined between the major axis of the respective oval-shaped cutting insert and the rotational axis on the side facing away from the tip of the milling tool holder. Preferably, the angle between the major axis and the rotational axis as determined by the cutting insert receiving pockets is the same for all cutting insert receiving pockets and thus for all oval-shaped cutting inserts. Due to the cutting insert receiving pockets being adapted such that the angles in the specified range are realized; a small approach angle which is smaller as compared to the approach angle in the case of round cutting inserts is provided which allows milling with reduced load on the active cutting edge. Further, this angular range allows independently using a first cutting edge part and a second cutting edge part of each cutting edge in high-feed surface finishing applications.

The milling tool holder is adapted such that the oval-shaped cutting inserts are mountable in the cutting insert receiving pockets in a first orientation in which the major axis of the oval-shaped cutting inserts extends at an angle between 85° and 95° with respect to the rotational axis. With this orientation, machining similar to machining with round cutting inserts but with lower approach angles is enabled as well as high-feed surface finishing machining with low cutting depth.

The milling tool holder is adapted such that the oval-shaped cutting inserts are mountable to the cutting insert receiving pockets in a second orientation in which the major axis of the oval-shaped cutting inserts extends at an angle in the range between 115° and 130° with respect to the rotational axis.

The milling tool holder is adapted such that the oval-shaped cutting inserts are mountable to the cutting insert receiving pockets in: (i) a first orientation in which the major axis of the oval-shaped cutting inserts extends at an angle between 85° and 95° with respect to the rotational axis and (ii) a second orientation in which the major axis of the oval-shaped cutting inserts extends at an angle between 115° and 130° with respect to the rotational axis. Thus, the insert receiving pockets allow that a first cutting edge part and a second cutting edge part of each cutting edge of an oval-shaped cutting insert can independently be used for high-feed surface finishing with low cutting depth. For example, mounting of oval-shaped cutting inserts in the first orientation can enable high-feed surface finishing with a first cutting edge part of an active cutting edge while a second cutting edge part of the active cutting edge is not used and mounting of the oval-shaped cutting inserts in the second orientation can enable high-feed surface finishing with the second cutting edge part of the active cutting edge after the first cutting edge part of the active cutting edge has worn.

Preferably, the cutting insert receiving pockets are arranged at the same distances and with the same orientation with regard to the rotational axis. In this case, all the cutting inserts can be mounted in similar positions, as in the case of conventional tool holders for round cutting inserts or conventional tool holders for high-feed surface finishing. Thus, a high degree of symmetry is given which enables a stable milling process. In particular, the cutting insert receiving pockets can be arranged such that they are evenly distributed around the rotational axis.

Further advantages and developments will become apparent from the following detail description of an embodiment with reference to the drawings.

In the figures:
- Fig. 1:: is a top view of an oval-shaped double-sided cutting insert according to an embodiment;
- Fig. 2:: is a first side view of the oval-shaped double-sided cutting insert;
- Fig. 3:: is a second side view of the oval-shaped double-sided cutting insert;
- Fig. 4:: is a schematic perspective illustration of the oval-shaped double-sided cutting insert;
- Fig. 5:: shows a milling tool according to an embodiment with cutting inserts mounted in a first orientation;
- Fig. 6:: is a schematic illustration for explaining operation of the milling tool with cutting inserts mounted in the first orientation;
- Fig. 7:: shows the milling tool according to the embodiment with cutting inserts mounted in a second orientation;
- Fig. 8:: is a schematic illustration for explaining operation of the milling tool with cutting inserts mounted in the second orientation; and
- Fig. 9:: is a schematic illustration for comparison of the oval-shaped cutting insert according to the embodiment to a conventional round cutting insert.

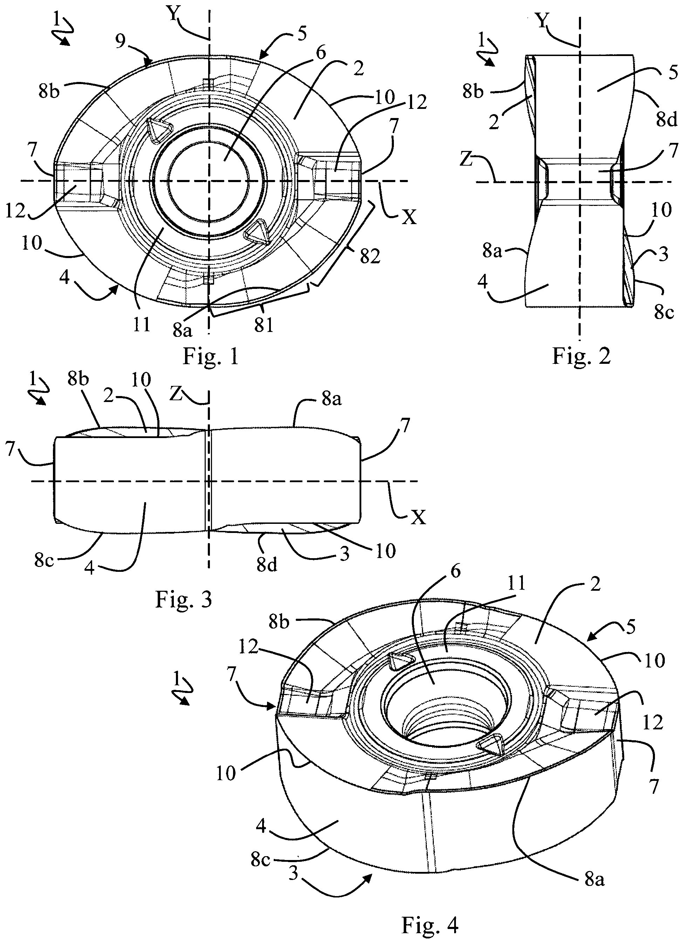

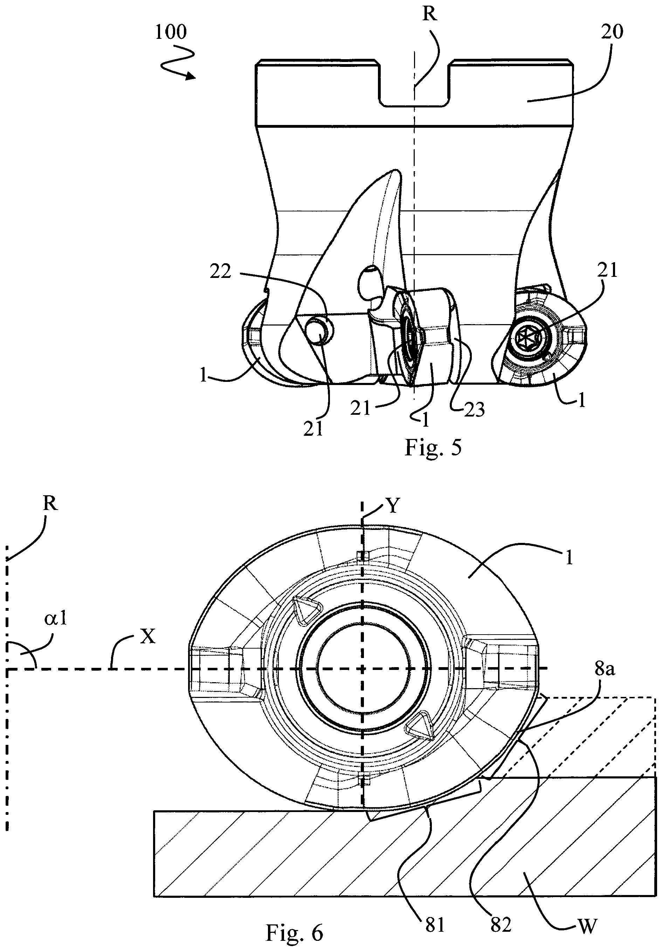

An embodiment will now be described with reference to Figs. 1 to 8. First, an oval-shaped double-sided indexable cutting insert for milling applications will be described with reference to Figs. 1 to 4. Thereafter, positioning of the cutting insert for milling and an arrangement of a plurality of the cutting inserts in a milling tool holder will be described with reference to Figs. 5 to 8.

As can be seen in Figs. 1 to 4, the cutting insert 1 according to the embodiment is formed as a double-sided indexable cutting insert having an oval-shape in top view. The cutting insert 1 comprises a top surface 2, a bottom surface 3, a first convex side surface 4, and a second convex side surface 5. The first convex side surface 4 and the second convex side surface 5 connect the top surface 2 and the bottom surface 3. Although the terms "top surface" and "bottom surface" are used in the present context, it will be apparent to a skilled person that this is for ease of explanation only and that whether a "top surface" is actually on top or not depends on the orientation of the cutting insert 1. In particular, of course the cutting insert 1 can be turned upside down such that the "top surface" becomes positioned below the "bottom surface" and vice versa.

A through-bore 6 is provided which extends concentric to a first symmetry axis Z and which intersects the top surface 2 and the bottom surface 3. A major axis X and a minor axis Y are defined by the oval shape of the cutting insert 1. The major axis X defines a second symmetry axis of the cutting insert 1. The minor axis Y defines a third symmetry axis of the cutting insert 1. The oval shape of the cutting insert 1 is mainly determined by the first convex side surface 4 and the second convex side surface 5. In top view the cutting insert 1 has substantially the shape of an elongated circle which has been elongated in the direction of the major axis X.

In the embodiment shown, flat side surfaces 7 are provided at the end portions where the first convex side surface 4 and the second convex side surface 5 meet. However, it should be noted that such additional flat side surfaces 7 need not necessarily be provided. The first convex side surface 4 and the second convex side surface 5 may, for instance, also be directly connected, e.g. by a radius, without such flat side surfaces 7 interposed therebetween. Further, if such flat side surfaces 7 are provided at all, they may only form a small amount of the surrounding side surface of the cutting insert 1, preferably less than 20 percent of the side surface, more preferably less than 15 percent of the side surface.

The cutting insert 1 according to the embodiment comprises a high degree of symmetry. In particular the top surface 2 is formed (at least with regard to those features having an influence on the cutting performance) identical to the bottom surface 3. Thus, a view onto the bottom surface 3 would look similar to the top view onto the top surface 2 which is shown in Fig. 1. Similarly, a side view from the right side in Fig. 1 as shown in Fig. 2 is similar to a side view from the left side in Fig. 1; and a side view from the upper side in Fig. 1 appears similar to the side view from the lower side in Fig. 1 which is shown in Fig. 3.

The cutting insert 1 is formed as an indexable cutting insert which means that a plurality of independently usable cutting edges or cutting edge portions are provided which can be used one after another when wear occurs. Indexation can be performed by rotating the cutting insert 1 about any one of its symmetry axes X, Y, and Z. The cutting insert 1 is realized as a thus-called double-sided cutting insert, i.e. cutting edges 8a to 8d are formed at intersections of the top surface 2 with the side surfaces 4 and 5 and at intersections of the bottom surface 3 with the side surfaces 4 and 5.

A first cutting edge 8a is formed at an intersection of the top surface 2 with the first convex side surface 4, a second cutting edge 8b is formed at an intersection of the top surface 2 with the second convex side surface 5, a third cutting edge 8c is formed at an intersection of the bottom surface 3 with the first convex side surface 4, and a fourth cutting edge 8d is formed at an intersection of the bottom surface 3 with the second convex side surface 5. A bevel or chamfer 9 may be formed along the respective cutting edges 8a to 8d or along parts of the cutting edges 8a to 8d. However, the cutting edges 8a to 8d may also be formed as "sharp" cutting edges which do not comprise such a bevel or chamfer 9. Due to the cutting insert 1 being indexable and comprising a high degree of symmetry, the individual cutting edges 8a to 8d can be used subsequently one after another when wear occurs.

As can be seen in Figs. 1 to 4, the part of each cutting edge 8a to 8d which can be used for cutting of material extends from close to the major axis X to at least the minor axis Y. At least adjacent to these useable parts of the cutting edges 8a to 8d, the top surface 2 and the bottom surface 3 are formed as chip surfaces. Further, at least adjacent to these useable parts of the cutting edges 8a to 8d, the first convex side surface 4 and the second convex side surface 5 are formed as clearance surfaces. In the embodiment shown, the remaining parts 10 of the intersections between the top surface 2 with the first convex side surface 4, between the top surface 2 with the second convex side surface 5, between the bottom surface 3 with the first convex side surface 4, and between the bottom surface 3 with the second convex side surface 5 do not actively participate in cutting of material. Thus, in top view the useable parts of the cutting edges 8a to 8d extend substantially over approximately one quadrant each. In the embodiment, in top view the useable parts of the cutting edges 8a to 8d each have a convex shape over their entire length. Preferably, the useable parts of the cutting edges 8a to 8d can have a shape of a section of a circle or of a section of an ellipse in top view onto the top surface. However, it is e.g. also possible that the useable parts of the cutting edges 8a to 8d have a shape comprising two or more straight sections connected by curved sections.

According to the embodiment, the cutting edges 8a to 8d each comprise a first cutting edge part 81 and a second cutting edge part 82. The first cutting edge part 81 and the second cutting edge part 82 are adapted such that the first cutting edge part 81 and the second cutting edge part 82 can either be used simultaneously as a continuous long cutting edge for machining a workpiece or independently one after another for independently machining a workpiece when the cutting insert 1 is mounted in a first orientation and a second orientation, respectively, as will be described in more detail further below.

The cutting insert 1 according to the embodiment is formed as a thus-called negative cutting insert having a cutting insert specific clearance angle of 0° all along the perimeter of the cutting insert. Thus, in the cutting insert 1, the side surfaces 4 and 5 extend in parallel to the first symmetry axis Z. This enables particularly cost-efficient and reliable production of the cutting inserts.

In a central region surrounding the through-bore 6, flat seat surfaces 11 are provided in both the top surface 2 and the bottom surface 3. These flat seat surfaces 11 serve for fixation of the cutting insert 1 in a milling tool holder 20. Further, the top and bottom surfaces are provided with rotation prevention surfaces 12 in proximity to the intersection of the major axis X with the side surfaces. These rotation prevention surfaces 12 are adapted to cooperate with corresponding abutment surfaces (not shown) provided in a milling tool holder 20 in order to prevent rotation of the cutting insert 1 during a milling process.

A first orientation of the cutting insert 1 during a milling process will now be described with reference to Figs. 5 and 6. In Fig. 5, a milling tool 100 is shown comprising a milling tool holder 20 and a plurality of the oval-shaped double-sided indexable cutting inserts 1 mounted to the milling tool holder 20 in a first orientation. As can be seen in Fig. 5, the respective cutting inserts 1 are fixed to the milling tool holder 20 by means of fastening screws 21 the threaded portions of which are passed through the respective through-bores 6 of the cutting inserts 10 and are engaged with corresponding threaded bores 22 provided in the milling tool holder 20. The milling tool holder 20 is provided with a plurality of insert receiving pockets 23 specifically adapted for receiving the oval-shaped double-sided indexable cutting inserts 1 according to the embodiment as described above. In particular, the insert receiving pockets 23 are each provided with structures cooperating with the flat seat surface 11 and with the rotation prevention surface 12 of the cutting insert 1. In this way, the cutting inserts 1 are securely mountable to the milling tool holder 20 such that rotation of the cutting inserts 1 relative to the fastening screws 21 is prevented.

Although in the exemplary embodiment shown in Fig. 5 a milling tool holder 20 equipped with four cutting inserts 1 is shown, the present invention is not restricted to this and the milling tool holder 20 may also comprise more than four insert receiving pockets 23 or less than four insert receiving pockets 23.

The milling tool holder 20 comprises a rotational axis R about which the milling tool holder 20 is rotated during a milling operation. As can be seen in Fig. 5, the insert receiving pockets 23 are arranged spaced apart from the rotational axis R such that, when the oval-shaped cutting inserts 1 are mounted to the insert receiving pockets 23, the oval-shaped cutting inserts 1 are arranged spaced apart from the rotational axis R. All the insert receiving pockets 23 are arranged at the same distance and with the same orientation with regard to the rotational axis R. Further, the insert receiving pockets 23 are distributed in regular intervals around the rotational axis R.

Fig. 6 is a schematic illustration of the orientation of the oval-shaped cutting inserts 1 relative to the rotational axis R and relative to a workpiece to be machined W. In Fig. 6, the orientation and position of one oval-shaped cutting insert 1 is shown for explanation. It should be noted that the other oval-shaped cutting inserts 1 are oriented and positioned correspondingly.

As can be seen in Fig. 6, when mounted in the first orientation which is shown in Figs. 5 and 6, the oval-shaped cutting inserts 1 are oriented relative to the milling tool holder 20 such that the major axis X of the oval shape is oriented substantially perpendicular to the rotational axis R of the milling tool holder 20. In particular, when mounted in the first orientation, the oval-shaped cutting inserts 1 are oriented such that the major axis X is arranged at an angle α1 between 85° and 95° with respect to the rotational axis R. The angle is determined between the major axis X of the respective oval-shaped cutting insert 1 and the rotational axis R on the side facing away from the tip of the milling tool holder 20.

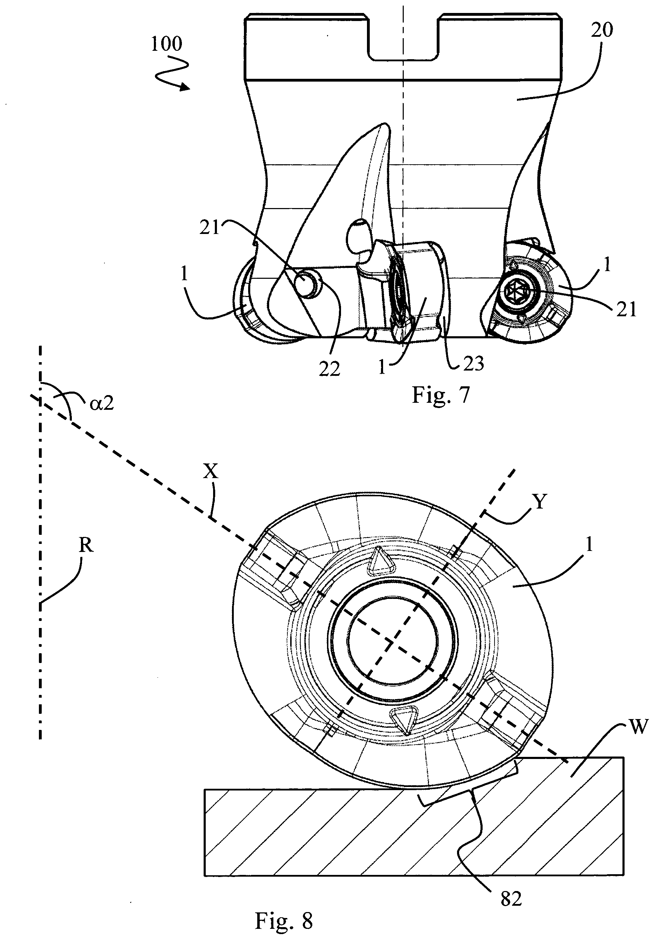

According to the embodiment, the milling tool holder 20 is adapted such that the oval-shaped cutting inserts 1 are also mountable to the insert receiving pockets 23 in a second orientation which is different from the above described first orientation. This second orientation will now be described with reference to Figs. 7 and 8. The milling tool holder 20 is provided with corresponding structures cooperating with the flat seat surface 11 and with the rotation prevention surface 12 in order to enable securely fixing the oval-shaped cutting inserts 1 in the insert receiving pockets 23 also in the second orientation.

The oval-shaped cutting inserts 1 can be brought from the first orientation shown in Fig. 5 to the second orientation shown in Fig. 7 by at least partially loosening the fastening screws 21, rotating the cutting inserts 1 by an angle below 45°, preferably below 40°, about the first symmetry axis Z, and subsequently fastening the fastening screws 21 again. In the specific embodiment shown, the cutting inserts 1 have e.g. to be rotated by 30° or 35° to be moved from the first orientation to the second orientation.

Fig. 8 is a schematic illustration of the orientation of the oval-shaped cutting inserts 1 relative to the rotational axis R and relative to the workpiece to be machined W, when the cutting inserts 1 are in the second orientation. Again, in Fig. 8 the orientation and position of one oval-shaped cutting insert 1 is shown for explanation. It should be noted that the other oval-shaped cutting inserts 1 are oriented and positioned correspondingly. As can be seen in Fig. 8, in the second orientation the major axis X of the cutting inserts 1 is arranged at an angle α2 between 115° and 130° relative to the rotational axis R. In the embodiment shown, the major axis X of the cutting inserts 1 is arranged at an angle α2 of approximately 120° or 125° relative to the rotational axis R.

Possible modes of operation of the milling tool 100 will now be described. First, possible modes of operation with the plurality of oval-shaped double-sided indexable cutting inserts 1 arranged in the first orientation will be described with reference to Figs. 5 and 6.

In Fig. 6, a first mode of operation with the cutting insert 1 arranged in the first position is schematically shown by the workpiece W being depicted in dashed lines. A second mode of operation with the cutting insert 1 arranged in the first position is schematically shown by the workpiece surface being depicted in solid lines.

In the first mode of operation, the full length of the cutting edge (one of 8a to 8d; schematically shown for the first cutting edge 8a in Fig. 6), can be used for machining the workpiece W. In other words, in this mode the first cutting edge part 81 and the second cutting edge part 82 are simultaneously used as a long continuous cutting edge for machining the workpiece. This is schematically indicated by the surface of the workpiece depicted in dashed lines. In this case, the oval-shaped double-sided indexable cutting inserts 1 are used similar to conventional round cutting inserts in a milling tool. However, as compared to conventional round cutting inserts, the oval-shaped cutting insert 1 according to the embodiment has several advantages which will now be described more in detail.

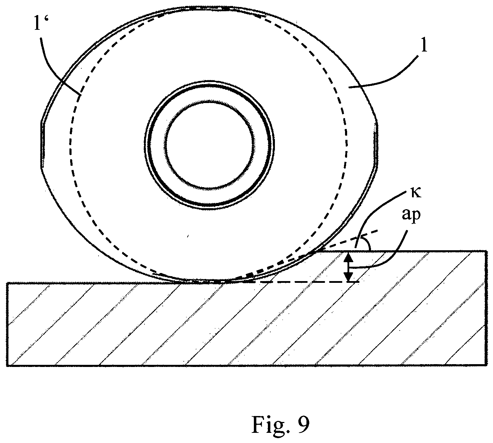

Fig. 9 is a schematic illustration for explaining the differences between the oval-shaped cutting insert 1 according to the embodiment and a conventional round cutting insert 1'. Important factors for characterizing the cutting performance of a milling tool are the approach angle κ and the cutting depth aₚ. The approach angle κ and the cutting depth aₚ are depicted for the oval-shaped cutting insert 1 in Fig. 9.

For the conventional round cutting insert 1', due to the round shape of the cutting edge, the resulting approach angle κ depends on the cutting depth aₚ with which the milling tool is operated. In particular, for an extremely small cutting depth the approach angle of a conventional round cutting insert 1' is close to zero and - with increasing cutting depth - the approach angle rises up to a maximum of 45° when the maximum cutting depth of half the diameter of the round cutting insert 1' is reached. It can be shown that the cutting edge of a conventional round cutting insert is in general more robust as compared to a conventional cutting insert having straight cutting edges. Due to this, conventionally round cutting inserts are typically employed for machining materials which are difficult to machine, such as high-elasticity steel, titan, stainless steel, aluminum, cast iron, and the like.

As can be seen in Fig. 9, the approach angle κ of the oval-shaped cutting insert 1 according to the embodiment also depends on the cutting depth aₚ with which the milling tool is operated. However, due to the elongated oval-shape of the cutting insert 1 which results in the major axis X being significantly longer than the minor axis Y, the approach angle κ rises significantly slower with increasing cutting depth aₚ as compared to the conventional round cutting insert 1'. In the embodiment shown, the maximum approach angle κ is for example 30° or 35° when the whole cutting edge 8a is used for machining the workpiece W. Due to this reduction in the approach angle κ, at a given cutting depth aₚ the resulting cutting forces are distributed over a longer section of the cutting edge 8a in the oval-shaped cutting insert 1 (as compared to a conventional round cutting insert 1' having a diameter similar to the width of the oval-shaped cutting insert 1 in the direction of the minor axis Y). Thus, an even more robust cutting edge is provided by the oval-shaped cutting insert 1 according to the embodiment in such a milling application in which the oval-shaped cutting insert 1 is used similar to a conventional round cutting insert 1'. As a consequence, compared to a conventional round cutting insert 1', the oval-shaped cutting insert 1 can be used with a higher feed rate or - if used with the same feed rate - has a longer lifetime.

However, due to the specific construction of the oval-shaped cutting insert 1 according to the embodiment, the cutting insert 1 can also be used in other modes of operation which will be described in the following.

With the oval-shaped cutting inserts 1 mounted in the first orientation as shown in Figs. 5 and 6, it is also possible to use the milling tool 100 as a high-feed milling tool operating with relatively low cutting depth aₚ but relatively high feed per revolution of the milling tool holder 20. In such an application, only the first cutting edge part 81 (which may form up to one half of the cutting edge 8a) is used when the cutting insert 1 is mounted in the first orientation. This situation is shown with the workpiece W depicted in solid lines in Fig. 6. In this application, the milling tool 100 operates with a small approach angle κ such that high feed is enabled. Further, in this case the second cutting edge part 82 is not used for machining the workpiece and thus will not become worn.

Consequently, in such a high-feed milling application, the second cutting edge part 82 can independently be used for machining the workpiece after the first cutting edge part 81 has worn. This is will be described with reference to Figs. 7 and 8.

When the first cutting edge part 81 is deteriorated from machining the workpiece with the oval-shaped cutting insert 1 in the first orientation in the high-feed mode of operation, the oval-shaped cutting inserts 1 can be brought into the second orientation shown in Figs. 7 and 8. With the oval-shaped cutting inserts 1 in the second orientation, high-feed machining using the second cutting edge part 82 (which may also form up to one half of the cutting edge 8a) can be performed. When the oval-shaped cutting inserts 1 are mounted in the second orientation, the first cutting edge parts 81 do not participate in machining the workpiece. Thus, for high-feed milling applications the oval-shaped cutting inserts 1 provide eight independently useable cutting edge parts, since each of the first to fourth cutting edges 8a to 8d comprises a first cutting edge part 81 and a second cutting edge part 82 which are independently useable by indexation.

Thus, due to the specific shape of the oval-shaped cutting inserts 1, the cutting inserts 1 can be used in a very versatile manner, either similar to conventional round cutting inserts but with improved performance and/or longer lifetime or in high-feed milling applications with an increased number of independently useable cutting edge parts. According to the present invention, oval-shaped cutting inserts 1 are provided which comprise a combination of the advantages of conventional round cutting inserts and of high-feed cutting inserts.

## Claims

1. An oval-shaped double-sided indexable cutting insert (1) for milling applications comprising:
a top surface (2),
a bottom surface (3),
a first convex side surface (4),
a second convex side surface (5), and
a first symmetry axis (Z) extending substantially perpendicular to the top surface (2) and the bottom surface (3);
wherein
a first cutting edge (8a) is formed at an intersection of the top surface (2) and the first convex side surface (4) ;
a second cutting edge (8b) is formed at an intersection of the top surface (2) and the second convex side surface (5);
a third cutting edge (8c) is formed at an intersection of the bottom surface (3) and the first convex side surface (4); and
a fourth cutting edge (8d) is formed at an intersection of the bottom surface (3) and the second convex side surface (5);
wherein the first to fourth cutting edges (8a, 8b, 8c, 8d) are formed identical and each cutting edge of the first to fourth cutting edges is adapted such that:
a first cutting edge part (81) and a second cutting edge part (82) are individually usable by rotation of the cutting insert (1) about the first symmetry axis (Z) by an angle of < 45°.

2. The oval-shaped cutting insert according to claim 1, **characterized in that** each cutting edge (8a, 8b, 8c, 8d) is adapted such that, in one mode of operation, both the first cutting edge part (81) and the second cutting edge part (82) are simultaneously useable for machining and, in another mode of operation, are individually usable for machining.

3. The oval-shaped cutting insert according to claim 1 or 2, wherein at least the portion of each cutting edge (8a, 8b, 8c, 8d) which is usable for cutting of material is convexly shaped over its entire length.

4. The oval-shaped cutting insert according to any one of claims 1 to 3, wherein at least the portion of each cutting edge (8a, 8b, 8c, 8d) which is usable for cutting of material has a shape of a section of a circle or of a section of an ellipse in top view onto the top surface (2).

5. The oval-shaped cutting insert according to any one of claims 1 to 4, wherein the first convex side surface (4) and the second convex side surface (5) extend in parallel to the first symmetry axis (Z).

6. A milling tool (100) comprising a milling tool holder (20) having a rotational axis (R) about which the milling tool holder (20) is rotatable for milling and comprising a plurality of cutting insert receiving pockets (23) adapted for mounting a plurality of oval-shaped indexable cutting inserts (1), and a plurality of oval-shaped double-sided indexable cutting inserts (1) according to any one of claims 1 to 5 mounted in the cutting insert receiving pockets (23), wherein the cutting insert receiving pockets (23) are adapted such that the oval-shaped cutting inserts (1) are mountable spaced apart from the rotational axis (R) and such that the oval-shaped cutting inserts (1) are mountable to the cutting insert receiving pockets (23) in:
a first orientation in which the major axis (X) of the oval-shaped cutting inserts (1) extends at an angle (α1) between 85° and 95° with respect to the rotational axis (R) and
a second orientation in which the major axis (X) of the oval-shaped cutting inserts (1) extends at an angle (α2) between 115° and 130° with respect to the rotational axis (R).

7. The milling tool according to claim 6, wherein the cutting insert receiving pockets (23) are arranged at the same distances and with the same orientation with regard to the rotational axis (R).

8. The milling tool according to claim 6 or 7, wherein the oval-shaped cutting inserts (1) are mounted with a major axis (X) of the oval-shaped cutting inserts (1) arranged at an angle (α1, α2) between 85° and 130° with respect to the rotational axis (R).

## Patentansprüche

1. Oval-förmiger doppelseitiger indexierbarer Schneideinsatz (1) für Fräsanwendungen aufweisend:
eine obere Oberfläche (2),
eine untere Oberfläche (3),
eine erste konvexe Seitenoberfläche (4),
eine zweite konvexe Seitenoberfläche (5), und
eine erste Symmetrieachse (Z), die sich im Wesentlichen senkrecht zur oberen Oberfläche (2) und unteren Oberfläche (3) erstreckt;
wobei
eine erste Schneidkante (8a) an einer Schnittlinie der oberen Oberfläche (2) und der ersten konvexen Seitenoberfläche (4) gebildet ist;
eine zweite Schneidkante (8b) an einer Schnittlinie der oberen Oberfläche (2) und der zweiten konvexen Seitenoberfläche (5) gebildet ist;
eine dritte Schneidkante (8c) an einer Schnittlinie der unteren Oberfläche (3) und der ersten konvexen Seitenoberfläche (4) gebildet ist; und
eine vierte Schneidkante (8d) an einer Schnittlinie der unteren Oberfläche (3) und der zweiten konvexen Seitenoberfläche (5) gebildet ist;
wobei die ersten bis vierten Schneidkanten (8a, 8b, 8c, 8d) identisch ausgebildet sind und jede Schneidkante der ersten bis vierten Schneidkanten derart angepasst ist, dass:
ein erster Schneidkantenteil (81) und ein zweiter Schneidkantenteil (82) durch Rotation des Schneideinsatzes (1) um die erste Symmetrieachse (Z) um einen Winkel < 45° individuell nutzbar sind.

2. Oval-förmiger Schneideinsatz nach Anspruch 1, **dadurch gekennzeichnet, dass** jede Schneidkante (8a, 8b, 8c, 8d) derart angepasst ist, dass der erste Schneidkantenteil (81) und der zweite Schneidkantenteil (82) - in einer Betriebsart -gleichzeitig zur Zerspanung nutzbar sind und - in einer anderen Betriebsart - individuell zur Zerspanung nutzbar sind.

3. Oval-förmiger Schneideinsatz nach Anspruch 1 oder 2, wobei zumindest der Abschnitt jeder Schneidkante (8a, 8b, 8c, 8d), der zum Schneiden von Material nutzbar ist, über seine gesamte Länge konvex geformt ist.

4. Oval-förmiger Schneideinsatz nach einem der Ansprüche 1 bis 3, wobei zumindest der Abschnitt jeder Schneidkante (8a, 8b, 8c, 8d), der zum Schneiden von Material nutzbar ist, in Aufsicht auf die obere Oberfläche (2) eine Form eines Kreisabschnittes oder eines Ellipsenabschnittes hat.

5. Oval-förmiger Schneideinsatz nach einem der Ansprüche 1 bis 4, wobei sich die erste konvexe Seitenoberfläche (4) und die zweite konvexe Seitenoberfläche (5) parallel zu der ersten Symmetrieachse (Z) erstrecken.

6. Fräswerkzeug (100) aufweisend einen Fräswerkzeughalter (20), der eine Rotationsachse (R) hat, um die der Fräswerkzeughalter (20) zum Fräsen rotierbar ist, und eine Mehrzahl von Schneideinsatzaufnahmetaschen (23) aufweist, die zum Befestigen von einer Mehrzahl von oval-förmigen indexierbaren Schneideinsätzen (1) angepasst sind, und eine Mehrzahl von oval-förmigen doppelseitigen indexierbaren Schneideinsätzen (1) nach einem der Ansprüche 1 bis 5, die in den Schneideinsatzaufnahmetaschen (23) befestigt sind, wobei die Schneideinsatzaufnahmetaschen (23) derart angepasst sind, dass die oval-förmigen Schneideinsätze (1) beabstandet von der Rotationsachse (R) befestigbar sind und derart, dass die oval-förmigen Schneideinsätze (1) an den Schneideinsatzaufnahmetaschen (23) befestigbar sind in:
einer ersten Orientierung, bei der sich die Hauptachse (X) der oval-förmigen Schneideinsätze (1) unter einem Winkel (α1) zwischen 85° und 95° bezüglich der Rotationsachse (R) erstreckt, und
einer zweiten Orientierung, bei der sich die Hauptachse (X) der oval-förmigen Schneideinsätze (1) unter einem Winkel (α2) zwischen 115° und 130° bezüglich der Rotationsachse (R) erstreckt.

7. Fräswerkzeug nach Anspruch 6, wobei die Schneideinsatzaufnahmetaschen (23) in denselben Abständen und mit derselben Orientierung bezüglich der Rotationsachse (R) angeordnet sind.

8. Fräswerkzeug nach Anspruch 6 oder 7, wobei die oval-förmigen Schneideinsätze (1) mit einer Hauptachse (X) der oval-förmigen Schneideinsätze (1) unter einem Winkel (α1, α2) zwischen 85° und 130° bezüglich der Rotationsachse (R) angeordnet befestigt sind.

## Revendications

1. Plaquette de coupe (1) double face indexable de forme ovale pour des applications de fraisage, comprenant :
une surface supérieure (2),
une surface inférieure (3),
une première surface latérale convexe (4),
une deuxième surface latérale convexe (5), et
un premier axe de symétrie (Z) s'étendant sensiblement perpendiculairement à la surface supérieure (2) et à la surface inférieure (3) ;
dans laquelle
un premier bord de coupe (8a) est formé au niveau d'une intersection de la surface supérieure (2) et de la première surface latérale convexe (4) ;
un deuxième bord de coupe (8b) est formé au niveau d'une intersection de la surface supérieure (2) et de la deuxième surface latérale convexe (5) ;
un troisième bord de coupe (8c) est formé au niveau d'une intersection de la surface inférieure (3) et de la première surface latérale convexe (4) ; et
un quatrième bord de coupe (8d) est formé au niveau d'une intersection de la surface inférieure (3) et de la deuxième surface latérale convexe (5) ;
dans laquelle les premier à quatrième bords de coupe (8a, 8b, 8c, 8d) sont formés de manière identique et chaque bord de coupe du premier au quatrième bord de coupe est adapté de telle sorte :
qu'une première partie de bord de coupe (81) et une deuxième partie de bord de coupe (82) puissent être utilisées individuellement par rotation de la plaquette de coupe (1) autour du premier axe de symétrie (Z) d'un angle inférieur à 45°.

2. Plaquette de coupe de forme ovale selon la revendication 1, **caractérisée en ce que** chaque bord de coupe (8a, 8b, 8c, 8d) est adapté de telle sorte que dans un mode de fonctionnement, à la fois la première partie de bord de coupe (81) et la deuxième partie de bord de coupe (82) puissent être utilisées simultanément pour l'usinage, et que, dans un autre mode de fonctionnement, elles puissent être utilisées individuellement pour l'usinage.

3. Plaquette de coupe de forme ovale selon la revendication 1 ou 2, dans laquelle au moins la portion de chaque bord de coupe (8a, 8b, 8c, 8d) qui peut être utilisée pour couper de la matière présente une forme convexe sur toute sa longueur.

4. Plaquette de coupe de forme ovale selon l'une quelconque des revendications 1 à 3, dans laquelle au moins la portion de chaque bord de coupe (8a, 8b, 8c, 8d) qui peut être utilisée pour couper de la matière présente une forme d'une section de cercle ou d'une section d'ellipse en vue de dessus sur la surface supérieure (2).

5. Plaquette de coupe de forme ovale selon l'une quelconque des revendications 1 à 4, dans laquelle la première surface latérale convexe (4) et la deuxième surface latérale convexe (5) s'étendent parallèlement au premier axe de symétrie (Z).

6. Outil de fraisage (100) comprenant un support d'outil de fraisage (20) ayant un axe de rotation (R) autour duquel le support d'outil de fraisage (20) peut tourner pour fraiser et comprenant une pluralité de cavités (23) recevant des plaquettes de coupe, prévues pour supporter une pluralité de plaquettes de coupe (1) double face indexables de forme ovale, et une pluralité de plaquettes de coupe (1) double face indexables de forme ovale selon l'une quelconque des revendications 1 à 5 montées dans les cavités (23) recevant des plaquettes de coupe, les cavités (23) recevant des plaquettes de coupe étant adaptées de telle sorte que les plaquettes de coupe de forme ovale (1) puissent être montées de manière espacée de l'axe de rotation (R) et de telle sorte que les plaquettes de coupe de forme ovale (1) puissent être montées sur les cavités (23) recevant des plaquettes de coupe dans :
une première orientation dans laquelle le grand axe (X) des plaquettes de coupe de forme ovale (1) s'étend suivant un angle (α1) compris entre 85° et 95° par rapport à l'axe de rotation (R) et
une deuxième orientation dans laquelle le grand axe (X) des plaquettes de coupe de forme ovale (1) s'étend suivant un angle (α2) compris entre 115° et 130° par rapport à l'axe de rotation (R).

7. Outil de fraisage selon la revendication 6, dans lequel les cavités (23) recevant des plaquettes de coupe sont disposées à la même distance et avec la même orientation par rapport à l'axe de rotation (R).

8. Outil de fraisage selon la revendication 6 ou 7, dans lequel les plaquettes de coupe de forme ovale (1) sont montées avec un grand axe (X) des plaquettes de coupe de forme ovale (1) disposé suivant un angle (α1, α2) compris entre 85° et 130° par rapport à l'axe de rotation (R).
